# EUROPEAN PATENT SPECIFICATION

(11) **EP 1 869 388 B1**
(45) Date of publication and mention of the grant of the patent: **05.08.2015**
(21) Application number: 06708374.1
(22) Date of filing: 20.02.2006
(51) Int. Cl.: F27B 3/18, F27D 13/00, F27D 3/00, C21C 5/56, F27D 3/06

(54) **COVER FOR A CONNECTION CONVEYOR FOR LOADING A METAL CHARGE INTO A MELTING FURNACE AND RELATIVE MOVEMENT DEVICE**
ABDECKUNG FÜR EINEN VERBINDUNGSFÖRDERER ZUM LADEN EINER METALLCHARGE IN EINEN SCHMELZOFEN UND ENTSPRECHENDE BEWEGUNGSVORRICHTUNG
PLAQUE DE COUVERTURE POUR UN CONVOYEUR DE LIAISON POUR LE CHARGEMENT D'UNE CHARGE METALLIQUE DANS UN FOUR DE FUSION ET DISPOSITIF DE MOUVEMENT RELATIF

(30) Priority: 22.02.2005 IT UD20050019
(43) Date of publication of application: 26.12.2007
(73) Proprietor: Danieli & C. Officine Meccaniche SpA, 33042 Buttrio (Udine) (IT)
(72) Inventor: TERLICHER, Stefano, I-33043 Cividale Del Friuli (IT); SELLAN, Romano, I-34124 Trieste (IT); MORSUT, Stefano, I-33100 Udine (IT); DIMITRIJEVIC, Vladimir, I-33100 Udine (IT)
(74) Representative: Petraz, Gilberto Luigi
(86) International application number: PCT/EP2006/060087
(87) International publication number: WO 2006/089869

(56) References cited:
- EP-A- 0 247 923
- GB-A- 190 935
- US-A- 3 855 952
- US-A- 6 004 504
- US-A1- 2001 055 739
- VALLOMY J A ET AL: "THE CONSTEEL PROCESS: AN INTEGRAL SCRAP PREHEATER FOR THE EAF" STEEL TIMES, FUEL & METALLURGICAL JOURNALS LTD. LONDON, GB, vol. 221, no. 5, 1 May 1993 (1993-05-01), page 221,223, XP000365104 ISSN: 0039-095X
- PATENT ABSTRACTS OF JAPAN vol. 1995, no. 11, 26 December 1995 (1995-12-26) & JP 07 198272 A (NKK CORP), 1 August 1995 (1995-08-01)

## Description

### FIELD OF THE INVENTION

The present invention concerns a cover, and the relative movement device, for a connection conveyor used for loading a metal charge in an electric arc melting furnace, of the type that uses a loading system with a belt or channel, hereafter denominated main conveyor, and with the introduction of the charge from a side of the furnace.

The connection conveyor to which the invention refers functions as the last segment of the main conveyor and cooperates directly with a suitable aperture made in the wall of the furnace in order to load the scrap iron or other type of metal charge inside the furnace.

### BACKGROUND OF THE INVENTION

Plants are known for the transformation and melting of metal charges, which comprise an electric arc furnace suitable to collaborate with a conveyor that transports and possibly preheats the scrap. The electric furnace provides at least a container, or hearth, and a covering roof. The electrodes are positioned through suitable holes present in the roof.

The conveyor, which can be of the vibrating type so as to allow the charge to advance, cooperates with the electric furnace on one side and, on the other side, with a scrap loading system.

The last segment of the main conveyor consists of an auxiliary conveyor, hereafter denominated connection conveyor, associated with translation means, which can be of the trolley type, pantograph, flag-type with a vertical axis of rotation or other suitable type.

Examples of this type of loading systems for electric furnaces are disclosed in US 2001/0055739 A1, in US-A-6.004.504 and in EP 0 247 923 A1.

The movement of the connection conveyor can even be of several meters.

When the terminal end of the connection conveyor is located in direct cooperation with the aperture in the wall of the furnace, the vibration imparted thereto determines the feed and the subsequent fall of the scrap into the furnace.

Normally, however, the position of the connection conveyor completely outside the furnace is assumed when there is no scrap on the conveyor.

The connection conveyor is shaped like a cradle, open above; when it cooperates with scrap preheating means, it is associated with a cover, or roof, which closes the space between the lateral aperture present in the furnace and the tunnel cover of the connection conveyor, so that the fumes exiting from the furnace can be properly channeled above the connection conveyor.

The lateral edges of the cover normally cooperate with sealing means, advantageously of the hydraulic type.

A first problem of known solutions, such for example that disclosed in US 2001/0055739 A1, is that the shape of the covers normally used, which is substantially arched or semi-circular and with a constant height for the whole length of the connection conveyor, does not guarantee, on the one hand, a tight seal, unless recourse is made to complex and costly auxiliary sealing elements, and on the other hand a correct and uniform conveyance of the fumes. This is caused by the fact that known covers do not ensure an efficient connection between the different shapes and sizes of the lateral aperture of the furnace and the tunnel cover of the main conveyor.

A second problem in this type of plant is that, in the event of blockages of the charge, or in general problems and/or needs for interventions near the lateral aperture of the furnace, accessibility for operators is made problematic by the very presence of the cover.

Solutions are known which provide opening covers, for example hinged on one side of the connection conveyor, or made by means of two or more valves opening to the inside or the outside. These solutions in any case oblige the operators to make very difficult maneuvers both to access the area near the aperture of the furnace, and also to carry out the necessary interventions, due to the interference caused by the cover even when it is in the open condition.

Maintenance operations and/or repairs to the cover are also made very difficult by the configuration in the open condition of known solutions.

Purpose of the invention is to achieve a device to move the cover of a connection conveyor which overcomes these disadvantages of the state of the art and facilitates operators in their maintenance operations, both those carried out near the lateral aperture of the furnace, and also those carried out on the cover itself.

Another purpose is to achieve a cover whose shape on the one hand guarantees a substantially tight seal, and on the other hand an efficient conveyance of the fumes to the tunnel where the metal charge is transiting and heating.

The Applicant has devised, tested and embodied the present invention to overcome the shortcomings of the state of the art and to obtain other advantages as described hereafter.

### SUMMARY OF THE INVENTION

The present invention is set forth and characterized essentially in the main claim, while the dependent claims describe other innovative characteristics of the invention.

According to a first feature of the present invention, the cover of the connection conveyor is mounted on slider means suitable to translate in a direction, advantageously, substantially orthogonal with respect to the direction of the longitudinal axis of the connection conveyor.

To be more exact, the translation movement of the slider occurs for an entity sufficient to take the cover from a first operating position directly cooperating with the connection conveyor, wherein the space between the lateral aperture of the furnace and the tunnel cover of the main conveyor is closed substantially in a sealed manner, to a second inactive position, completely outside the bulk of at least the connection conveyor.

The second inactive position is assumed by the cover every time it is necessary to carry out repairs and/or maintenance operations at any part whatsoever of the movement means of the lateral aperture of the furnace, or also of the connection conveyor, and also the terminal part of the main conveyor. These interventions are facilitated by the fact that the complete translation of the cover to a position outside the bulk facilitates easy accessibility to the zones near the furnace and makes the cover non interfering with the zone in which interventions are to be made.

According to another feature of the present invention, the cover has a first front end with a shape and size substantially mating to the shape and size of the lateral aperture of the furnace, while it has a second rear end with a shape and size mating to the shape and size of the tunnel cover of the main conveyor.

The cover of the connection conveyor has, in longitudinal section, from its front end facing to the furnace to its rear end facing to the main conveyor, a first short substantially horizontal segment, a second segment inclined upwards which connects the lesser height of the lateral aperture to the greater height of the tunnel cover of the main conveyor, and a third short substantially horizontal segment.

During the normal use of the melting furnace, the cover is disposed with the first front segment substantially abutting against the wall of the furnace in correspondence with the lateral aperture, while its rear segment is located in a position substantially coupling with the front segment of the tunnel cover of the conveyor.

To be more exact, according to the invention, the abutment of the first front segment of the cover with the lateral aperture of the furnace forms a gap with a limited value between these elements, a gap which normally varies from about 30 to about 180 mm.

In a first embodiment of the invention, the value of said gap is substantially fixed. According to a variant, the value of the gap can be adjusted according to the quantity of air, called false air, that is to be introduced into the space defined between the cover and the connection conveyor.

In fact, through this gap of limited amplitude there is an inlet of air from the outside environment which is beneficial because it achieves a partial post-combustion of the carbon monoxide (CO). Moreover, such a small gap, which brings in false air, does not affect the power used to create the depression in the tunnel.

In one embodiment of the invention, at least a burner is installed on the cover, suitable to be selectively activated in order to take the temperature of the fumes exiting from the aperture of the furnace to a desired value, and functions as a safety device against accidental explosions, before the fumes enter the tunnel cover associated with the scrap conveyor means.

According to another variant, one or more apertures are present on the cover, associated with selectively opening shutters, by means of which a desired quantity of air can be selectively introduced, through depression, according to the desired conditions of post-combustion that are to be achieved before the fumes enter the scrap conveyor tunnel.

Said systems to introduce air can cooperate with the soufflage nozzles, generally known, provided in the initial part of the tunnel associated with the scrap conveyor means, in order to optimize the performance of the post-combustion of the CO contained in the fumes.

According to the invention, the conformation with the increasing section of the cover allows, advantageously, to slow down the speed of the gas from a value of about 70 m/sec, in correspondence with the inlet section of the cover, to a value of about 30-35 m/sec in correspondence with the outlet section. A slower speed of the fumes in the tunnel is equivalent to a longer permanence of the fumes in the tunnel, and hence the fumes give up a greater amount of their sensible heat to the scrap. Moreover, the shape of the cover allows to have an improved fluid-dynamics with the elimination of vortexes and fewer drops in pressure.

According to another preferential embodiment, the lateral edges of the cover cooperate with respective hydraulic channels disposed laterally at least with respect to the connection conveyor, so as to define two lateral hydraulic seals which prevent the fumes arriving from the lateral aperture of the furnace, which have developed during the melting of the steel, from leaking from the cover and spreading into the environment.

As already said, when blockages occur in the feed of the charge, or when it is necessary to carry out maintenance operations and/or repairs in the zone near the lateral aperture of the furnace, the cover can be lifted by some centimeters, also to free the lateral edges thereof from the respective sealing hydraulic channels, and translated to a position completely outside the bulk in order to facilitate access for the operators.

According to an embodiment of the invention, the cover of the connecting conveyor is cooled by a cooling structure comprising at least two layers of tubes in which a cooling medium, for example water, is made to circulate, respectively a front layer facing the inside of the connecting conveyor and a second layer facing the outside of the connecting conveyor.

In the first, inner, layer the tubes are spaced between each other wherein in the second, outer, layer the tubes are substantially in contact between each other.

The space between the two layers of tubes is preferably filled with refractory mortar, or other type of similar material, which acts as an insulation and separation layer in order to reduce the thermal flux towards the outer layer of tubes. This insulation intermediate material reduces the thermal flux absorbed by the outer layer of tubes and prevents damages and overheating of the same.

The fact that the inner layer comprises tubes which are spaced with each other, i.e. that the inner layer has a reduced surface subjected to the radiating heat, is advantageous because the large amount of heat generated in the inside of the connecting conveyor is progressively absorbed partly by the inner layer of tubes, partly by the insulating intermediate material and partly by the outer layer of tubes. In this way, the inner layer of tubes is not subjected to dangerous and excessive thermal stresses and overheating.

In a further preferred embodiment, also the tunnel-shaped main conveyor comprises a layered cooling structure as above-disclosed with reference to the connecting conveyor.

### BRIEF DESCRIPTION OF THE DRAWINGS

These and other characteristics of the present invention will become apparent from the following description of a preferential form of embodiment, given as a non-restrictive example with reference to the attached drawings wherein:

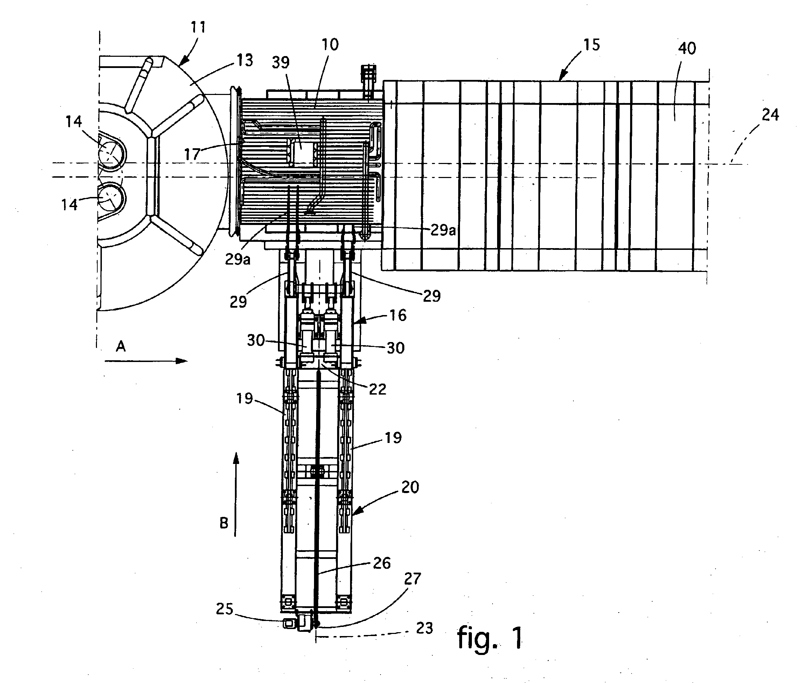

- fig. 1 is a plane view of a cover for a connection conveyor and the relative movement device;
- fig. 2 is a partial section seen from "A" of fig. 1;
- fig. 3 is a partial section seen from "B" of fig. 1.

### DETAILED DESCRIPTION OF A PREFERENTIAL FORM OF EMBODIMENT OF THE INVENTION

With reference to the attached figures, the number 10 denotes generally a cover for a connection conveyor 21 used for loading a metal charge into a melting furnace 11.

The connection conveyor 21 constitutes, purely to give an example, the terminal part of a main conveyor 15, in this case with a belt or channel (only the last segment of which is visible in the figures). The connection conveyor 21 is mounted on a trolley 34. The trolley 34 allows the connection conveyor 21 to move backwards and forwards by some meters in order to be disposed in a first operating position, partly introduced inside the volume of the melting furnace 11, in order to discharge the metal charge (not shown) inside it, and a second stand-by position, completely outside the furnace, assumed for example when the melting furnace 11 has to be inclined for a certain entity in order to carry out the tapping of the molten metal.

During the loading steps, the main conveyor 15, which is of the vibrating type, feeds the metal charge towards the furnace, continuously or intermittently according to the loading tables, until it progressively disposes the metal charge on the base plane of the connection conveyor 21.

The connection conveyor 21, and/or the trolley 34, are also associated with vibration means, so that the metal charge can be discharged inside the furnace 11 when the connection conveyor 21 has at least its terminal end disposed inside it.

The melting furnace 11 comprises a hearth 12, normally made of refractory material, and a roof 13, through which the electrodes 14 are positioned. On the wall of the hearth 12 an aperture 17 is made, in this case lateral, which serves for the at least partial introduction of the connection conveyor 21 inside the volume of the furnace 11.

The cover 10 of the connection conveyor 21 in this case is mounted on a slider 16 having wheels 18 able to slide on rails 19 of a track 20. The track 20 develops in a direction 23 which is substantially orthogonal to the direction of the longitudinal axis 24 of the connection conveyor 21 and the main conveyor 15. The slider 16 is able to be moved along the track 20 by driving a motor 25 which makes a chain 26 rotate between a drive pulley 27, kinematically connected to the motor 25, and a driven pulley 28 mounted on a beam 22 solid with the slider 16.

Pairs of supporting arms 29 are mounted on the slider 16, one front end 29a of which is solid with the cover 10, while the rear end 29b is solidly associated with the end of a lifting actuator 30.

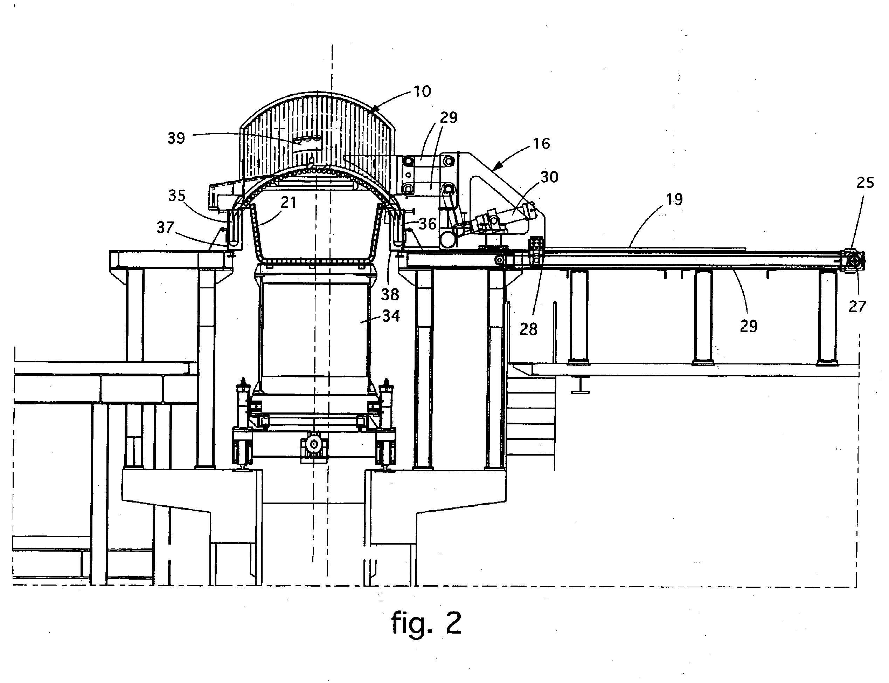

Moreover, as shown in fig. 2, the cover 10 has two lateral edges 35 and 36 which, in the first operating position in which it covers the connection conveyor 21, cooperate with corresponding hydraulic channels 37 and 38 with a substantially U-shaped section, disposed laterally and on opposite sides with respect to the connection conveyor 21. To be more exact, inside the hydraulic channels 37 and 38 some water is preferably disposed, and the lateral edges 35 and 36 of the cover 10 are immersed in the water, so as to define two hydraulic seals which prevent the leakage into the outside environment of the fumes produced in the hearth 12 during the melting of the steel.

In the first operating position, the cover 10 is disposed with its front edge 31 substantially in abutment against the wall of the furnace, in correspondence with the lateral aperture 17, leaving a fixed or variable gap, normally from about 30 to about 180 mm. Through this gap, with its limited amplitude, an introduction of air occurs from the outside environment. This air is beneficial since it achieves a partial post-combustion of the carbon monoxide (CO). Moreover, such a small gap, which attracts the false air, does not affect the power employed to create the depression in the tunnel.

The partial post-combustion of the CO, achieved before the fumes enter the tunnel of the main conveyor 15, makes more efficient the functioning of the possible soufflage nozzles (not shown), located at least in correspondence with the first segment of the tunnel.

According to the embodiment shown here, a burner 39 is installed on the cover 10, and is selectively activated in order to deliver a desired quantity of energy to activate the fumes, for example when the temperature of the fumes is less than a desired value and has to be raised before they enter the tunnel cover 40 associated with the main conveyor 15.

In a variant not shown here, shutters with adjustable opening are provided on the cover 10 to allow the selective introduction of air due to depression, in order to improve the post-combustion conditions in the segment covered by the cover 10.

When the cover 10 has to be removed from the zone near the furnace 11, for example due to blockages or the need for maintenance operations or repairs to the connection conveyor 21 or to the front end of the main conveyor 15, it is first lifted by activating the lifting actuators 30. The substantially pantograph structural configuration, with overlapping pairs of supporting arms 29, determines that the lifting of the cover 10 occurs keeping it always substantially parallel to itself. The lifting occurs at least until the lateral edges 35 and 36 are dis-associated from the respective hydraulic channels 37 and 38, and the cover 10 is freed from interference with the lateral walls of the connection conveyor 21.

Once lifted, the cover 10 is translated laterally by driving the motor 25, which makes the chain 26 rotate and therefore moves the slider 16 away from the furnace 11 and from the connection conveyor 21.

This lateral movement can take place for the entire extension of the track 20, and in any case for an extent such as to take the cover 10 to a position of total non-interference with the connection conveyor 21 and with the adjacent structures, facilitating access for the operators to the zone facing the aperture 17 of the furnace 11 and not impeding the interventions to be performed.

The cover 10 has a conformation with an arched roof, with a reduced height in the front zone where it cooperates with the lateral aperture 17 of the furnace and a greater height in the rear zone where it cooperates with the tunnel cover 40 of the main conveyor 15.

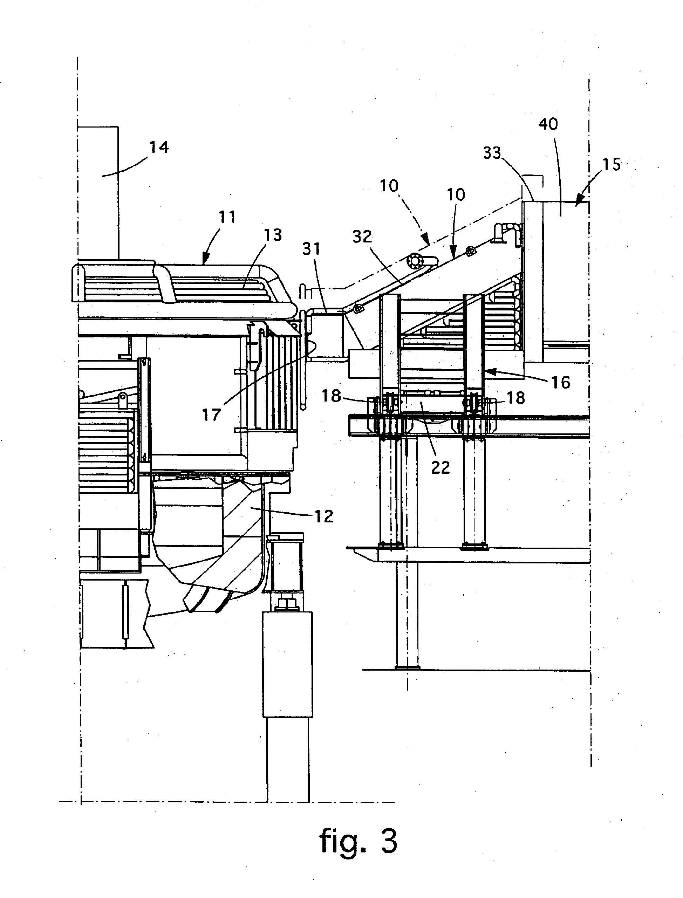

To be more exact (fig. 3), in longitudinal section, the cover 10 has a first horizontal segment 31 in its front zone located, during use, near the aperture 17, having a height a little more than the height of said aperture 17. The first segment 31 is located, during use, substantially resting on the wall of the furnace 11 to act as a sealing element for the fumes arriving from the melting furnace 11 during its normal activity.

The cover 10 also has a second connection segment 32, inclined upwards, and a third substantially horizontal segment 33, which couples with the tunnel cover 40 of the main conveyor 15.

The fumes exiting from the lateral aperture 17 of the melting furnace 11 are thus channeled through the connection conveyor 21, and from it to the main conveyor 15, following a gradual expansion path which does not cause sudden variations in speed, turbulence, vortexes or anomalous flows.

Thanks to this conformation of the cover 10 with an increasing section from its front part to its rear part, we obtain the advantage that the fumes slow down from a speed of about 70 m/sec, at which they substantially exit from the lateral aperture 17, to a value of about 30-35 m/sec, at which they enter the tunnel of the main conveyor 15. This slow-down gives the considerable advantage that it determines a longer permanence of the fumes inside the tunnel of the main conveyor 15, and hence they give up more of their sensible heat to the scrap. Moreover, the increasing section of the cover 10 allows to have an improved fluid-dynamics with the elimination of vortexes and fewer drops in pressure.

In a preferred embodiment not here disclosed, the cover 10 of the connecting conveyor 21 is cooled by a layered cooling structure comprising at least two layers of tubes in which a cooling medium, for example water, is made to circulate, respectively a front layer facing the inside of the connecting conveyor 21 and a second layer facing the outside of the connecting conveyor 21.

In the first, inner, layer the tubes are spaced between each other wherein in the second, outer, layer the tubes are substantially in contact between each other.

The space between the two layers of tubes is filled with refractory mortar, or other type of similar material, which acts as an insulation and separation layer in order to reduce the thermal flux towards the outer layer of tubes. This insulation intermediate material reduces the thermal flux absorbed by the outer layer of tubes and prevents damages and overheating of the same.

Modifications and variants may be made to the cover 10 for a connection conveyor 21 as described heretofore, and to the relative movement device, all of which shall come within the field of protection as defined by the attached claims.

## Claims

1. Connection conveyor cover used in a connecting conveyor for loading a metal charge into a melting furnace (11) of the type that uses a loading system with a main conveyor (15) having at its terminal end said connection conveyor (21) for the introduction of the charge from a lateral aperture (17) of the furnace (11), said cover including a front end (31) facing, in use, to said furnace (11) having shape and size mating with the shape and size of said lateral aperture (17) of said furnace (11), and a rear end (33), facing, in use, to said main conveyor (15), having different shape and size than that of said first front end (31) in order to mate with the shape and size of the tunnel cover (40) of said conveyor (15), **characterized in that**, in longitudinal section, said cover (10) has a first short horizontal segment (31) able to be disposed, during use, coupling with said lateral aperture (17), a second segment (32) inclined upwards which connects the lesser height of said lateral aperture (17) with the greater height of said tunnel cover (40) of the main conveyor (15), and a third short horizontal segment (33) able to be disposed coupling with said tunnel cover (40) of the main conveyor (15), wherein said connection cover comprises a first operating position in which its front end (31) is in abutment against a wall of said furnace (11) and a second inactive position, laterally translated with respect to said connection conveyor (21), in which it is completely outside the interference with said connection conveyor (21).

2. Cover as in claim 1, **characterized in that** it has an arc shaped roof.

3. Cover as in any claim hereinbefore, **characterized in that** it comprises at least a lateral edge (35, 36) able to cooperate with a corresponding hydraulic channel (37, 38) disposed laterally to said connection conveyor (21), so as to define at least a hydraulic seal for containing the fumes produced in said melting furnace (11).

4. Cover as in any claim hereinbefore, **characterized in that** it includes a cooling structure comprising at least two layers of tubes in which a cooling medium is made to circulate, respectively a front layer facing the inside of said connecting conveyor (21) and a second layer facing the outside of said connecting conveyor (21).

5. Movement device for a cover (10) of a connection conveyor (21) as in any claim hereinbefore, **characterized in that** it comprises slider means (16) having wheels (18) sliding on rails (19) of a track (20), suitable to translate said cover in an inclined direction (23) with respect to the direction of the longitudinal axis (24) of said main conveyor (15) and of said connection conveyor (21), to move said cover (10) from a first operative position in which a front end (31) of this cover (10) is in abutment against a wall of the furnace (11), and a second inactive position laterally translated with respect to said connection conveyor (21), in which it is completely outside the interference with said connection conveyor (21).

6. Movement device as in claim 5, **characterized in that** said direction of translation (23) is orthogonal to said longitudinal axis (24).

7. Movement device as in claim 5 or 6, **characterized in that** said slider means (16) include wheels (18) able to slide on rails (19) of a track (20) that develops in said inclined direction (23) with respect to the direction of the longitudinal axis (24) of the connection conveyor (21) and of the main conveyor (15).

8. Movement device as in any claim from 5 to 7, **characterized in that** on said slider means (16) pairs of supporting arms (29) are mounted, one front end (29a) of which is solid with said cover (10) while the rear end (29b) is solidly associated with the end of a lifting actuator (30).

9. Movement device as in claim 8, **characterized in that** said supporting arms (29) have a pantograph configuration, so that the lifting of said cover (10) occurs with the cover (10) always remaining parallel to itself.

10. Movement device as in claims 5 and 8, **characterized in that** said supporting arms (29) are configured to lift said cover (10) at least until said lateral edge (35, 36) is dis-associated from said hydraulic channel (37, 38), and/or said cover (10) is freed from interference with the lateral walls of said connection conveyor (21).

## Patentansprüche

1. Verbindungsförderer-Abdeckung, verwendet in einem Verbindungsförderer zum Einbringen einer Metallcharge in einen Schmelzofen (11) des Typs, bei dem ein Beschickungssystem mit einem Hauptförderer (15) verwendet wird, an dessen Abschlussende sich der Verbindungsförderer (21) für das Einführen der Charge von einer seitlichen Öffnung (17) des Ofens (11) befindet, wobei die Abdeckung ein vorderes Ende (31), das bei Gebrauch dem Ofen (11) gegenüberliegt, aufweisend eine Gestalt und Abmessung, die mit der Gestalt und Abmessung der seitlichen Öffnung (17) des Ofens (11) zusammenpassen, und ein hinteres Ende (33) umfasst, das bei Gebrauch dem Hauptförderer (15) gegenüberliegt, aufweisend eine Gestalt und Abmessung verschieden von denen des ersten vorderen Endes (31), um mit der Gestalt und Abmessung der Tunnelabdeckung (40) des Förderers (15) zusammenzupassen, **dadurch gekennzeichnet, dass** die Abdeckung (10) im Längsschnitt einen ersten, während des Gebrauchs entsorgbaren, kurzen, horizontalen Abschnitt (31), der mit der seitlichen Öffnung (17) kuppelt, einen zweiten nach oben geneigten Abschnitt (32), der die geringere Höhe der seitlichen Öffnung (17) mit der größeren Höhe der Tunnelabdeckung (40) des Hauptförderers (15) verbindet, und einen dritten entsorgbaren, kurzen, horizontalen Abschnitt (33) aufweist, der mit der Tunnelabdeckung (40) des Hauptförderers (15) kuppelt, wobei die Verbindungsabdeckung eine erste Arbeitsposition, in der sich ihr vorderes Ende (31) im Anschlag gegen eine Wand des Ofens (11) befindet, und eine zweite inaktive Position umfasst, die in Bezug auf den Verbindundungsförderer (21) seitlich verschoben ist, in der sie sich vollständig außerhalb des Eingriffs mit dem Verbindungsförderer (21) befindet.

2. Abdeckung nach Anspruch 1, **dadurch gekennzeichnet, dass** sie ein bogenförmiges Dach aufweist.

3. Abdeckung nach einem der vorhergehenden Ansprüche, **dadurch gekennzeichnet, dass** sie wenigstens eine Seitenkante (35, 36) umfasst, die mit einem seitlich des Verbindungsförderers (21) angeordneten, entsprechenden hydraulischen Kanal (37,38) zusammenwirken kann, um wenigstens eine hydraulische Dichtung für die Rückhaltung der im Schmelzofen (11) erzeugten Abgase zu definieren.

4. Abdeckung nach einem der vorhergehenden Ansprüche, **dadurch gekennzeichnet, dass** sie eine Kühlstruktur enthält, umfassend wenigstens zwei Lagen von Rohren, in denen ein Kühlmedium zirkuliert wird, wobei jeweils eine vordere Lage der Innenseite des Verbindungsförderers (21) gegenüberliegt und eine zweite Lage der Außenseite des Verbindungsförderers (21) gegenüberliegt.

5. Verstellvorrichtung für eine Abdeckung (10) eines Verbindungsförderers (21) nach einem der vorhergehenden Ansprüche, **dadurch gekennzeichnet, dass** sie Verschiebemittel (16) mit auf Schienen (19) einer Führungsbahn (20) gleitenden Rädern (18) umfaßt, geeignet zum Verschieben der Abdeckung in einer geneigten Richtung (23) in Bezug auf die Richtung der Längsachse (24) des Hauptförderers (15) und des Verbindungsförderers (21), um die Abdeckung (10) von einer ersten Arbeitsposition, in der sich ein vorderes Ende (31) dieser Abdeckung (10) in Anlage gegen eine Wand des Ofens (11) befindet, und einer zweiten inaktiven Position seitlich verschoben in Bezug auf den Verbindungsförderer (21) zu verstellen, in der sie sich vollständig außerhalb des Eingriffs mit dem Verbindungsförderer (21) befindet.

6. Verstellvorrichtung nach Anspruch 5, **dadurch gekennzeichnet, dass** die Verschieberichtung (23) orthogonal zur Längsachse (24) ist.

7. Verstellvorrichtung nach Anspruch 5 oder 6, **dadurch gekennzeichnet, dass** die Verschiebemittel (16) Räder (18) umfassen, geeignet zum Gleiten auf Schienen (19) einer Führungsbahn (20), die sich in der genannten geneigten Richtung (23) in Bezug auf die Richtung der Längsachse (24) des Verbindungsförderers (21) und des Hauptförderers (15) entwickelt.

8. Verstellvorrichtung nach einem der Ansprüche 5 bis 7, **dadurch gekennzeichnet, dass** an den Verschiebemitteln (16) Paare von Tragarmen (29) angebracht sind, von denen ein vorderes Ende (29a) einstückig mit der Abdeckung (10) ist, während das hintere Ende (29b) fest mit dem Ende eines Hebebetätigungsglieds (30) verbunden ist.

9. Verstellvorrichtung nach Anspruch 8, **dadurch gekennzeichnet, dass** die Tragarme (29) eine Stromabnehmerkonfiguration aufweisen, so dass das Anheben der Abdeckung (10) mit stets parallel zu sich selbst bleibender Abdeckung (10) erfolgt.

10. Verstellvorrichtung nach den Ansprüchen 5 und 8, **dadurch gekennzeichnet, dass** die Tragarme (29) so konfiguriert sind, dass sie die Abdeckung (10) zumindest anheben, bis die Seitenkante (35, 36) vom hydraulischen Kanal (37, 38) getrennt ist und/oder die Abdeckung (10) von einem Eingreifen mit den Seitenwänden des Verbindungsförderers (21) freigegeben ist.

## Revendications

1. Plaque de couverture pour un convoyeur de liaison utilisée dans un convoyeur de liaison pour charger une charge métallique dans un four de fusion (11) du type utilisant une système de chargement avec un convoyeur principal (15) ayant, à son extrémité terminale, ledit convoyeur de liaison (21) pour l'introduction de la charge depuis une ouverture latérale (17) du four (11), ladite plaque de couverture incluant une extrémité frontale (31) faisant face, lors de l'utilisation, audit four (11) ayant une forme et une taille correspondant avec la forme et la taille de ladite ouverture latérale (17) dudit four (11), et une extrémité arrière (33), faisant face, lors de l'utilisation, audit convoyeur principal (15), ayant une forme et une taille différentes de celles de la première extrémité frontale (31) afin de correspondre avec la forme et la taille de la plaque de couverture de tunnel (40) dudit convoyeur (15), **caractérisé en ce que**, en section longitudinale, ladite plaque de couverture (10) comporte un premier segment horizontal court (31) capable d'être disposé, durant l'utilisation, en couplage avec ladite ouverture latérale (17), un deuxième segment (32) incliné vers le haut et qui relie la plus petite hauteur de ladite ouverture latérale (17) à la plus grande hauteur de ladite plaque de couverture de tunnel (40) du convoyeur principal (15), et un troisième segment horizontal court (33) capable d'être disposé en couplage avec ladite plaque de couverture de tunnel (40) du convoyeur principal (15), ladite plaque de couverture de liaison comprenant une première position fonctionnelle dans laquelle son extrémité frontale (31) est en butée contre une paroi dudit four (11) et une seconde position inactive, décalée latéralement par rapport audit convoyeur de liaison (21), dans laquelle elle est complètement hors interférence avec ledit convoyeur de liaison (21).

2. Plaque de couverture selon la revendication 1, **caractérisée en ce qu'**elle comprend un toit de forme arquée.

3. Plaque de couverture selon l'une quelconque des revendications précédentes, **caractérisée en ce qu'**elle comprend au moins une paroi latérale (35, 36) capable de coopérer avec un canal hydraulique correspondant (37, 38) disposé latéralement par rapport audit convoyeur de liaison (21), de façon à former au moins une étanchéité hydraulique pour contenir les fumées produites dans ledit four de fusion (11).

4. Plaque de couverture selon l'une quelconque des revendications précédentes, **caractérisée en ce qu'**elle inclut une structure de refroidissement comprenant au moins deux couches de tubes dans lesquelles on fait circuler un fluide de refroidissement, à savoir, une couche frontale faisant face à l'intérieur dudit convoyeur de liaison (21) et une seconde couche faisant face à l'extérieur dudit convoyeur de liaison (21).

5. Dispositif de déplacement pour une plaque de couverture (10) d'un convoyeur de liaison (21) selon l'une quelconque des revendications précédentes, **caractérisé en ce qu'**il comprend des moyens de glissement (16) ayant des roues (18) glissant sur des rails (19) d'une piste (20), apte à déplacer ladite plaque de couverture dans une direction inclinée (23) par rapport à la direction de l'axe longitudinal (24) dudit convoyeur principal (15) et dudit convoyeur de liaison (21), pour déplacer ladite plaque de couverture (10) d'une première position fonctionnelle dans laquelle une extrémité frontale (31) de cette plaque de couverture (10) est en butée contre une paroi du four (11), et une seconde position inactive décalée latéralement par rapport audit convoyeur de liaison (21), dans laquelle elle est complètement hors interférence avec ledit convoyeur de liaison (21).

6. Dispositif de déplacement selon la revendication 5, **caractérisé en ce que** ladite direction de déplacement (23) est orthogonale audit axe longitudinal (24).

7. Dispositif de déplacement selon la revendication 5 ou 6, caractérisé en ce lesdits moyens de glissement (16) incluent des roues (18) aptes à glisser sur des rails (19) d'une piste (20) qui s'étend dans ladite direction inclinée (23) par rapport à la direction de l'axe longitudinal (24) du convoyeur de liaison (21) et du convoyeur principal (15).

8. Dispositif de déplacement selon l'une quelconque des revendications 5 à 7, **caractérisé en ce que** sur lesdits moyens de glissement (16) sont montés des paires de bras de support (29) dont une extrémité frontale (29a) est solidaire de ladite plaque de couverture (10) tandis que l'extrémité arrière (29b) est solidairement associée à l'extrémité d'une organe de soulèvement (30).

9. Dispositif de déplacement selon la revendication 8, **caractérisé en ce que** lesdits bras de support (29) ont une configuration de pantographe, de sorte que le soulèvement de ladite plaque de couverture (10) se produit avec la plaque de couverture (10) restant toujours parallèle à elle-même.

10. Dispositif de déplacement selon les revendications 5 et 8, **caractérisé en ce que** lesdits bras de support (29) sont configurés pour soulever ladite plaque de couverture (10) au moins jusqu'à ce que ladite paroi latérale (35, 36) soit dissociée dudit canal hydraulique (37, 38), et/ou que ladite plaque de couverture (10) soit exempte d'interférence avec les parois latérales dudit convoyeur de liaison (21).
